# EUROPÄISCHE PATENTSCHRIFT

(11) **EP 1 010 678 B1**
(45) Veröffentlichungstag und Bekanntmachung des Hinweises auf die Patenterteilung: **21.04.2004**
(21) Anmeldenummer: 99123928.6
(22) Anmeldetag: 02.12.1999
(51) Int. Cl.: C03C 25/10, C03C 25/26, C03C 25/34

(54) **Beschlichtete Glasfasern sowie deren Verwendung**
Sized glass fibres and their use
Fibres de verre ensimées et leur utilisation

(30) Priorität: 14.12.1998 DE 19857530
(43) Veröffentlichungstag der Anmeldung: 21.06.2000
(73) Patentinhaber: BAYER AG, 51368 Leverkusen (DE); BAYER ANTWERPEN N.V., 2040 Antwerpen (BE)
(72) Erfinder: Audenaert, Raymond, Dr., 9220 Hamme (BE); Joachimi, Detlev, Dr., 47800 Krefeld (DE); Karbach, Alexander, Dr., 47800 Krefeld (DE); Kirchmeyer, Stephan, Dr., 51375 Leverkusen (DE); Simon, Joachim, Dr., 40589 Düsseldorf (DE)

(56) Entgegenhaltungen:
- JP-A- 9 208 268
- US-A- 3 926 894
- US-A- 4 038 243
- US-A- 4 394 418
- PATENT ABSTRACTS OF JAPAN Bd. 1997, Nr. 12 25 Dezember 1997 & JP 09 208 268 A (NITTO BOSEKI CO LTD) 12 August 1997

## Beschreibung

Die vorliegende Erfindung betrifft Schlichtezusammensetzungen, beschlichtete Glasfasern sowie ihre Verwendung.

Die Eigenschaften von Verbunden aus Glasfasern und Polymeren werden in hohem Maße von der Scherfestigkeit zwischen Glasfaser und der die Glasfaser umgebenden Polymermatrix beeinflusst. Die Aufgabe der Schlichte besteht darin, diesen Verbund zwischen der Glasfaser und dem Matrixpolymer herzustellen und gleichzeitig die Herstell- und Verarbeitbarkeit der Glasfasern sicherzustellen. Als Schlichten werden Zusammensetzungen aus Wasser, einem polymeren Bindemittel (dem sogenannten Filmbildner), einem Haftvermittler, Gleitmitteln, Antistatika und weiteren Hilfsmitteln verwendet. Als Bindemittel verwendet man im allgemeinen organische, wasserdispergierbare oder lösliche Polyvinylacetat-, Polyesterepoxid-, Polyurethan-, Polyacrylat-, Polyolefinharze oder deren Mischungen.

Allgemein werden Filmbildner und Haftvermittler so gewählt, dass eine Affinität zwischen der Polymermatrix und dem Filmbildner und/oder dem Haftvermittler besteht und so ein mechanischer Verbund zwischen Glasfaser und Polymermatrix hergestellt wird. Es versteht sich daher, dass die Rezepturen der Schlichten auf die jeweilige Polymermatrix optimiert werden müssen und dass die Eigenschaften der Verbunde empfindlich auf Veränderungen der Schlichtezusammensetzung reagieren.

Bei teilkristallinen Thermoplasten kann durch die Schlichte auch die Kristallinität (Verhältnis kristalline/amorphe Bereiche; Kristallmorphologie) des Polymeren in den die Glasfaser umgebenden Bereichen beeinflusst werden.

Von teilkristallinen Thermoplasten ist bekannt, dass bestimmte organische oder anorganische Stoffe nukleierend wirken, d.h. Keimbildner für das Kristallwachstum der teilkristallinen Polymeren sind. Die Nukleierungswirkung beruht auf der Wechselwirkung (z.B. sterische Wechselwirkungen, Wasserstoffbrückenbindungen) der Teilchenoberfläche des Nukleierungsmittels mit den Polymerketten. Die Polymerketten ordnen sich durch die Wechselwirkung auf der Oberfläche, wodurch das Kristallwachstum initiiert bzw. begünstigt wird. Keimbildner oder Nukleierungsmittel werden überall dort bei der Herstellung von Compounds eingesetzt, wo Beschleunigung der Kristallisation und/oder homogenere Keimbildung gewünscht wird. Homogene Keimbildung führt normalerweise zu kleineren Kristalliten mit einheitlicherer Größenverteilung und kann so zur Verbesserung mechanischer Eigenschaften, wie Zähigkeit und Festigkeit führen. Die Keimbildungswirkung von Nukleierungsmitteln erfolgt bei Verbunden, die Glasfasern enthalten von der Matrix. Unter den Herstellungsbedingungen nukleierter, glasfaserverstärkter Compounds wird das Nukleierungsmittel während der Compoundierung als Feststoff oder in Form eines Konzentrates zugegeben und gleichmäßig in der Matrix verteilt.

Aufgabe der vorliegenden Erfindung war es, Polymerverbunde (Verbunde aus Polymer und Glasfasern) zur Verfügung zu stellen, die besonders gute mechanische Eigenschaften, wie z.B. Zähigkeit und Festigkeit aufweisen.

Diese Aufgabe konnte überraschenderweise durch spezifische Schlichtezusammensetzungen bzw. mit Glasfasern gelöst werden, die mit diesen spezifischen Schlichtezusammensetzungen beschlichtet sind. Die erfindungsgemäßen Schlichtezusammensetzungen enthalten neben wasserdispergierbaren oder -löslichen Polyepoxien-, Polyestern, Polyvinylacetaten, Polyacrylaten und/oder Polyurethanen als Filmbildner, organofunktionellen Silanen als Haftvermittler und weiteren üblichen Schlichtebestandteilen organische oder anorganische in Polymerschmelzen, insbesondere in Polyamiden, in Polypropylen und in Polybutylenterephthalat schwerlösliche Nukleierungsmittel mit Teilchengrößen <300 nm.

Schwerlöslich heisst in diesem Zusammenhang, dass ein Prozent und weniger des Nukleierungsmittels in Lösung gehen.

Gegenstand der Erfindung sind beschlichete Glasfasern, die mit einer Schlichtezusammsetzug, die aus folgenden Komponenten besteht, beschlichtet sind
a) 2 bis 20 Gew.-%, bevorzugt 4 bis 10 Gew.-% wasserdispergierbaren, -emulgierbaren oder -löslichen Polyepoxiden, Polyestern, Polyvinylacetaten, Polyacrylaten und/oder Polyurethanen als Filmbildner,
b) 0,1 bis 10 Gew.-%, bevorzugt 0,3 bis 2 Gew.-% organofunktionellen Alkoxysilanen als Haftvermittler,
c) 0,1 bis 20 Gew.-%, bevorzugt 0,5 bis 5 Gew.-% anorganischen oder organischen, in Polymerschmelzen, insbesondere Polyamiden, Polypropylen und Polybutylenterephthalat mit einem Prozent und weniger in Lösung gehenden Nukleierungsmitteln mit mittleren Teilchengrößen <300 nm und >10 nm, bevorzugt <150 nm, besonders bevorzugt zwischen 150 nm und 40 nm, wobei bei anisometrischen Nukleierungsmitteln (z.B. plättchen- oder nadelförmigen) unter der Teilchengröße die Dicke bzw. der Durchmesser zu verstehen ist, die unter den Prozesstemperaturen bei Einarbeitung der beschlichteten Glasfasern in die Polymerschmelze chemisch inert und thermisch stabil sind,
d) 0 bis 5 Gew.-%, bevorzugt 0 bis 1 Gew.-% weiteren üblichen Hilfsmitteln, wie beispielsweise Gleitmittel, Antistatika, Emulgatoren, Netzmittel etc.,
e) 0 bis 5 Gew.-% Zusätzen zur Einstellung des für die jeweilige Schlichte optimalen pH-Wertes zwischen 4 und 10 (z.B. organische oder anorganische Säuren oder Basen) und
f) Rest Wasser auf 100 Gew.-%.

Bei der Komponente (c) handelt es sich bevorzugt um Nukleierungsmittel wie z.B. Talkum, Bariumsulfat, Titandioxid, Lithiumsalze, Calciumphenylphosphinat, Natriumphenylphosphinat, Calciumfluorid, Salze organischer Säuren (beispielsweise Benzoesäure- und Terephthalsäure-derivate), Sorbitol, Sorbitolderivate, Tannin, Tanninderivate etc.

Ein weiterer Gegenstand der Erfindung ist die Verwendung der erfindungsgemäßen, beschlichteten Glasfasern zur Verstärkung von thermoplastischen und duroplastischen Polymeren, besonders bevorzugt von thermoplastischen Polyamiden, Polypropylen und aromatischen Polyestern verwendet.

Die Nukleierungswirkung der erfindungsgemäßen Schlichten bzw. der damit beschlichteten Glasfasern im Verbund ist umso überraschender, da es bisher nicht möglich war, Nukleierungsmittel so auf der Glasfaser zu fixieren, dass bei der Compoundierung keine Separierung (durch Scherkräfte bedingte mechanische Ablösung) von der Glasfaser erfolgt. Die abgelösten Partikel der Nukleierungsmittel bewirkten dann nämlich wie bei den üblichen nukleierten Verbunden eine bevorzugte Kristallisation in den Glasfaser-fernen Bereichen der Polymermatrix.

Bei Nukleierungsmitteln, die in der betreffenden Polymerschmelze löslich sind, erfolgte die mechanische Ablösung von Nukleierungspartikeln in Kombination mit der Auflösung der Nukleierungsmittel an der Glasfaseroberfläche. Daraus resultierte letztlich eine gleichmäßige Verteilung in der Matrix, also nicht die gewünschte bevorzugte Kristallisation an der Glasfaseroberfläche. Bei Verwendung zu kleiner Nukleierungspartikel (Teilchengröße « Schlichtefilmdicke) besteht die Gefahr der Überdeckung der nukleierenden Teilchenoberfläche mit Schlichte. Der Verbleib der Teilchen auf der Glasfaser ist zwar dadurch gesichert, die nukleierende Wirkung der Teilchenoberfläche kommt aber wegen der Überdeckung mit Schlichte nicht zum Tragen.

Als besonders geeignet erwiesen sich Nukleierungsmittel, deren Teilchengröße im Bereich der Filmdicke der Glasfaserschlichte liegen, also im Bereich von 40 nm bis 200 nm. Bei anisometrischen Nukleierungsmitteln (z.B. plättchen- oder nadelförmigen) ist unter Teilchengröße hierbei die Dicke bzw. der Durchmesser zu verstehen; die Länge und Breite kann bei derartig geformten Nukleierungsmitteln bis zu einigen µm (Mikrometern) betragen.

Zur Herstellung der erfindungsgemäßen beschlichteten Glasfasern sind sowohl die für die Glasseidenfabrikation verwendeten, bekannten Glastypen, wie E-, A-, C- und S-Glas, als auch die bekannten Glasstapelfasererzeugnisse geeignet. Unter den genannten Glastypen für die Herstellung von Endlosglasfasern besitzen die E-Glasfasern aufgrund ihrer Alkalifreiheit, ihrer hohen Zugfestigkeit und ihrem hohen Elastizitätsmodul die größte Bedeutung für die Verstärkung von Kunststoffen.

Zur Herstellung der beschlichteten Glasfasern werden diese nach bekannten Verfahren mit der Schlichte aus
a) 2 bis 20 Gew.-%, bevorzugt 4 bis 10 Gew.-% wasserdispergierbaren, -emulgierbaren oder -löslichen Polyepoxiden, Polyestern, Polyvinylacetaten, Polyacrylaten oder Polyurethanen,
b) 0,1 bis 10 Gew.-%, bevorzugt 0,3 bis 2 Gew.-% organofunktionellen Alkoxysilanen,
c) 0,1 bis 20 Gew.-%, bevorzugt 0,5 bis 5 Gew.-% anorganische oder organische, in Polymerschmelzen, insbesondere Polyamiden, Polypropylen und Polybutylenterephthalat mit einem Prozent und weniger in Lösung gehenden Nukleierungsmitteln mit mittleren Teilchengrößen <300 nm und >10 nm, wobei bei anisometrischen Nukleierungsmitteln (z.B. plättchen- oder nadelförmigen) unter der Teilchengröße die Dicke bzw. der Durchmesser zu verstehen ist, die unter den Prozesstemperaturen bei der Einarbeitung der beschlichteten Glasfasern in die Polymerschmelze chemisch inert und thermisch stabil sind,
d) 0 bis 5 Gew.-%, bevorzugt 0 bis 1 Gew.-% weiteren üblichen Hilfsmitteln, wie beispielsweise Gleitmittel, Antistatika, Emulgatoren und Netzmittel etc.,
e) 0 bis 5 Gew.-% Zusätzen zur Einstellung des (für die jeweilige Schlichte optimalen) pH-Wertes zwischen 4 und 10 (z.B. organische oder anorganische Säuren oder Basen) und
f) Rest Wasser auf 100 Gew.-%
beschlichtet und danach getrocknet.

In der Schlichte können weitere Komponenten wie z.B. Emulgatoren, weitere filmbildende Harze, weitere Haftvermittler, Gleitmittel und Hilfsstoffe wie Netzmittel oder Antistatika enthalten sein. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in K.L. Loewenstein, "The Manufacturing Technology of Continuous Glass Fibres", Elsevier Scientific Publishing Corp., Amsterdam, London, New York, 1983, beschrieben. Die Glasfasern können über beliebige Methoden beschlichtet werden, beispielsweise mit Hilfe geeigneter Vorrichtungen, wie z.B. Sprüh- oder Walzenapplikatoren. Auf die mit hoher Geschwindigkeit aus Spinndüsen gezogenen Glasfilamente können sofort nach ihrem Erstarren, d.h. noch vor dem Aufwickeln, Schlichten aufgetragen werden. Es ist aber auch möglich, die Fasern im Anschluss an den Spinnprozess in einem Tauchbad zu beschlichten.

Als Polyepoxid-Filmbildner sind wasserdispergierte, -emulgierte oder in Wasser gelöste Epoxidharze geeignet. Es handelt sich dabei bevorzugt um modifizierte oder durch Amine, saure Gruppen oder hydrophil-nichtionische Gruppen modifizierte Epoxidharze auf der Basis von Diglycidylethern zweiwertiger Phenole wie Brenzkatechin, Resorcin, Hydrochinon, 4,4'-Dihydroxydiphenyldimethylmethan (Bisphenol A), 4,4'-Dihydroxy-3,3'-dimethyl-diphenylpropan, 4,4'-Dihydroxydiphenylsulfon, Glycidylethern zweiwertiger, aromatischer, aliphatischer und cycloaliphatischer Carbonsäuren wie beispielsweise Phthalsäureanhydridbisglycidylether oder Adipinsäurebisglycidylether, Glycidylethern zweiwertiger, aliphatischer Alkohole wie Butandiolbisglycidylether, Hexandiolbisglycidylether oder Polyoxyalkylenglykolbisglycidylether sowie Polyglycidylethern polywertiger Phenole, beispielsweise von Novolaken (Umsetzungsprodukte von ein- oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan, Epoxid-Verbindungen auf der Basis von aromatischen Aminen und Epichlorhydrin, beispielsweise von Glycerin, Trimethylolpropan, Pentaerythrit und weiteren Glycidylverbindungen wie Trisglycidylisocyanurat. Als chemische Modifizierungen sind beispielsweise die Addition von Aminen oder die Addition von hydrophilen Polyethern, z.B. Polyethylenglykolen, geeignet. Geeignete Polyepoxid-Dispersionen sind z.B. in EP-A 27 942, EP-A 311 894, US-A 3 249 412, US-A 3 449 281, US-A 3 997 306 und US-A 4 487 797 beschrieben. Bevorzugt werden in Wasser dispergierte, emulgierte oder gelöste Polyesterepoxide auf Basis von Bisphenol A und Novolaken eingesetzt.

Polyurethan-Filmbildner sind in Wasser dispergierte, emulgierte oder gelöste Reaktionsprodukte von bevorzugt difunktionellen Polyisocyanaten mit bevorzugt difunktionellen Polyolen und gegebenenfalls bevorzugt difunktionellen Polyaminen. Die Synthese von Polyurethan-Dispersionen, verwendbare Bausteine, die Herstellverfahren und ihre Eigenschaften sind dem Fachmann bekannt und beispielsweise in Houben-Weyl, "Methoden der Organischen Chemie", Band E20, herausgegeben von H. Bartl und J. Falbe, Georg Thieme Verlag Stuttgart, New York 1987, auf den Seiten 1587 bis 1604, 1659 bis 1681 und 1686 bis 1689 beschrieben.

Geeignete Isocyanate für die Polyurethan-Filmbildner sind aliphatische, cycloaliphatische, araliphatische, aromatische und heterocyclische Polyisocyanate oder beliebige

Gemische dieser Polyisocyanate, wie z.B. 1,6-Hexamethylendiisocyanat, 1-Isocyanato-3,3,5-trimethyl-5-isocyanatomethyl-cyclohexan, 2,4- und 2,6-Toluylendiisocyanat, Diphenylmethan-2,4'- und/oder -4,4'-diisocyanat.

Geeignete Polyole für die Polyurethan-Filmbildner sind Polyester, also z.B. Umsetzungsprodukte von vorzugsweise zweiwertigen Polyalkoholen wie z.B. Ethylenglykol, Propylenglykol, Butylenglykol und Hexandiol mit vorzugsweise zweiwertigen Polycarbonsäuren oder deren veresterungsfähigen Derivaten wie z.B. Bernsteinsäure, Adipinsäure, Phthalsäure, Phthalsäureanhydrid, Maleinsäure und Maleinsäureanhydrid. Auch Polyester aus Lactonen, z.B. ε-Caprolactam, sind einsetzbar. Weiterhin sind Polyether geeignet, hergestellt z.B. durch Polymerisation von Epoxiden wie z.B. Ethylenoxid, Propylenoxid oder Tetrahydrofuran mit sich selbst oder durch Anlagerung der Epoxide an Startkomponenten mit reaktionsfähigen Wasserstoffatomen wie Wasser, Alkohole, Ammoniak oder Amine.

Als sogenannte Kettenverlängerer für die Polyurethan-Filmbildner, d.h. vorzugsweise difunktionelle Polyole oder Polyamine mit einem Molekulargewicht von kleiner als 400 werden besonders bevorzugt: zweiwertige Polyalkohole wie Ethylenglykol, Propylenglykol, Butylenglykol, Aminoalkohole wie Ethanolamin, N-Methyldiethanolamin sowie difunktionelle Polyamine wie z.B. Ethylendiamin, 1,4-Tetramethylendiamin, Hexamethylendiamin, 1-Amino-3,3,5-trimethyl-5-aminomethylcyclohexan, Bis-(3-aminopropyl)methylamin und Hydrazin.

Auch Epoxidgruppen oder verkappte Isocyanatgruppen (z.B. EP-A 137 427) aufweisende Polyurethan-Dispersionen, -Emulsionen oder -Lösungen sind geeignet.

Polyester-Dispersionen sind bevorzugt Umsetzungsprodukte aus den vorgenannten Polyepoxiden mit den vorgenannten Polycarbonsäuren bzw. carboxylgruppenhaltige Polyester (z.B. EP-A-27 942), die keine Epoxidgruppen mehr enthalten.

Geeignete organofunktionelle Silane (b) sind beispielsweise 3-Aminopropyltrimethoxysilan, 3-Aminopropyltriethoxysilan, 3-Aminopropyltris-methoxyethoxysilan, 3-Aminopropyl-methyl-diethoxysilan, N-2-Aminoethyl-3-aminopropyltrimethoxysilan, N-2-Aminoethyl-3-aminopropyl-methyl-dimethoxysilan und N-Methyl-3-aminopropyltrimethoxysilan, 3-Glycidyloxypropyltrimethoxysilan, 3-Methacryloxypropyltrimethoxysilan, 3-Mercaptopropyltrimethoxysilan, Vinyltriethoxysilan oder Vinyltrimethoxysilan, Oligoazamidosilane z.B. von der Firma WITCO.

Geeignete Nukleierungsmittel (c) sind z.B. Talkum, Bariumsulfat, Titandioxid, Lithiumsalze, Calciumphenylphosphinat, Natriumphenylphosphinat, Calciumfluorid, Salze organischer Säuren (Benzoesäure- und Phthalsäurederivaten), Sorbitol, Sorbitolderivate, Tannin, Tanninderivate etc.

Zusätzlich können weitere Schlichtekomponenten (d) wie anionische, kationische oder nichtionische Emulgatoren, weitere filmbildende Harze, Gleitmittel wie z.B. Polyalkylenglykolether von Fettalkoholen oder Fettaminen, Polyalkylenglykolester und Glycerinester von Fettsäuren mit 12 bis 18 C-Atomen, Polyalkylenglykole höherer Fettsäureamide mit 12 bis 18 C-Atomen von Polyalkylenglykolen und/oder Alkenylaminen, quartäre Stickstoffverbindungen, z.B. ethoxylierte Imidazoliniumsalze, Mineralöle oder Wachse und Hilfsstoffe wie Netzmittel oder Antistatika, wie z.B. Lithiumchlorid oder Ammoniumchlorid, in den Schlichten enthalten sein. Diese weiteren Hilfsstoffe sind dem Fachmann bekannt und beispielsweise in K.L. Loewenstein, "The Manufacturing Technology of Continuous Glass Fibres", Elsevier Scientific Publishing Corp., Amsterdam, London, New York, 1983, beschrieben.

Die erfindungsgemäßen Glasfasern sind als Verstärkungsfasern für thermoplastische Polymere wie z.B. Polycarbonat, Polyamid-6 und Polyamid-6,6, aromatische Polyester wie z.B. Polyethylenterephthalat und Polybutylenterephthalat, Polypropylen, Polyurethane oder Polyarylensulfide sowie duroplastische Polymere wie ungesättigte Polyesterharze, Epoxidharze und Phenol-Formaldehydharze geeignet.

Bevorzugt werden die erfindungsgemäßen Glasfasern als Verstärkungsfasern für Polyamide, aromatische Polyester und Polypropylen verwendet.

Die vorliegende Erfindung soll anhand der nachfolgenden Ausführungsbeispiele näher erläutert werden.

### Beispiele

### Beispiel 1 und Vergleichsbeispiel 1

### (Herstellung der erfindungsgemäßen beschlichteten Glasfasern)

Die Schlichten (Zusammensetzung siehe Tabelle 1) wurden unter Rühren auf unbeschlichtete, gemahlene Glasfasern (Milled Fibers; erhältlich z.B. als Handelsprodukt MF 7980 von BAYER AG, Leverkusen) aufgetragen. Die so beschlichteten Glasfasern wurden anschließend 10 Stunden bei 130°C getrocknet.

**Tabelle 1**

| Schlichtekomponenten | Beispiel 1 [Gew.-%] | Vergleich 1 [Gew.-%] |
|---|---|---|
| Wasser | 86,1 | 86,7 |
| 80 gew.-%ige Essigsäure | 0,3 | 0,3 |
| Silan A 1100 (Handelsprodukt von WITCO) | 1,0 | 1,0 |
| Baybond® PU 401 (Handelsprodukt von BAYER AG) | 12,0 | 12,0 |
| Talkum (Partikelgröße, d₅₀: 57 nm) | 0,6 | - |

### Herstellung des in der Schlichte verwendeten Talkums (Partikelgröße, d₅₀: 57 nm)

Im folgenden wird ein Verfahren zur Herstellung des eingesetzten Talkums beschrieben, das bevorzugt durchgeführt werden kann:

In 1900 ml deionisiertem Wasser wurden 50 g Polyvinylpyrrolidon K17 (Luviskol K17) und 50 g Natriumoctylsulfat unter intensiver Durchmischung mit einem Laborrührer gelöst. Zu dieser Lösung wurden 500 g Talkum A3 (Fa. Naintsch Mineralwerke GmbH, Graz) zugesetzt und mit einem Intensiv-Rührsystem (Ultra-Turrax) homogenisiert.

Die so erhaltene Suspension wurde in einer Rührwerkskugelmühle, (Drais-PML-V/H der Firma Draiswerke GmbH, Mannheim) unter Verwendung von Mahlkugeln aus Zirkondioxid mit einer Größe von 0,3 bis 0,4 mm, (Zerkleinerungskörperfüllgrad 70 %, Rührerdrehzahl 3000 U/min.) über einen Zeitraum von 120 Minuten nasszerkleinert.

Die Partikelcharakterisierung wurde mittels Ultrazentrifuge (Massenverteilung) vorgenommen. Dabei wurden folgende Werte für die Massenverteilung ermittelt:

| | d₅₀ |
|---|---|
| Homogenisierte Suspension, Partikelgrößen vor der Nasszerkleinerung | 0,99 µm |
| Partikelgrößen nach der Nasszerkleinerung (210 Minuten) | 57 nm |

Dabei bedeutet (für Partikelgrößen der homogenisierten Suspension vor der Nasszerkleinerung) d₅₀, dass 50 % aller Partikel nicht größer als 0,99 µm sind. Als Partikel sind in diesem Zusammenhang sowohl Primärpartikel als auch Aggregate bzw. Agglomerate zu verstehen.

Dabei bedeutet (für Partikelgrößen nach der Nasszerkleinerung) d₅₀, dass 50 % aller Partikel nicht größer als 57 nm sind. Als Partikel sind in diesem Zusammenhang sowohl Primärpartikel als auch Aggregate bzw. Agglomerate zu verstehen.

### Beispiel 2

### (Verwendung der beschlichteten Glasfasern)

70 Gew.-Teile Polyamid 6 (Durethan® B29, Handelsprodukt der Fa. BAYER AG, Leverkusen) und 30 Gew.-Teile beschlichtete Glasfasern aus Beispiel 1 bzw. Vergleichsbeispiel 1 wurden auf einem Zweiwellenextruder (ZSK 32 von Werner & Pfleiderer) bei einer Extrudertemperatur von 260°C zu Formmassen extrudiert und granuliert. Von den Formmassen wurden auf einer üblichen Spritzgussmaschine 80 x 10 x 4 mm-Prüfstäbe und Zugstäbe hergestellt. Es wurden Biegefestigkeit nach ISO 178, Zugfestigkeit nach ISO 527 sowie die Schlagzähigkeit bei Raumtemperatur nach IZOD (ISO 180 1C) geprüft.

**Tabelle 2**

| Verwendung von beschlichteten | Biege-Modul in [MPa] | Biegefestigkeit in [Mpa] | Zugfestigkeit in [Mpa] | Schlagzähigkeit in [kJ/m²] |
|---|---|---|---|---|
| Glasfasern aus Beispiel 1 (Talkum enthaltende Schlichte) | 6470 | 174 | 99 | 24,4 |
| Glasfasern aus Vergleichsbeispiel 1 (Schlichte ohne Talkum) | 6020 | 165 | 94 | 22,9 |

### Beispiel 3

### (Heiztischpolarisationsmikroskopische Untersuchung der beschlichtete Glasfasern enthaltenden Formmassen)

Dünnschnitte der durch Eincompoundieren der entsprechenden beschlichteten Glasfasern enthaltenden Polyamid 6-Compounds wurden bei folgendem Temperaturprogramm auf dem Heiztisch eines Polarisationsmikroskopes zwischen gekreuzten Polarisatoren aufgeschmolzen, getempert und wieder abgekühlt:

| | | | | |
|---|---|---|---|---|
| Raumtemperatur | → | 60°C/min | → | 250°C 6 min halten |
| | | 40°C/min | → | 205°C 5 min halten |
| | | 60°C/min | → | 250°C 6 min halten |
| | | 40°C/min | → | 205°C 5 min halten |
| | | 60°C/min | → | 250°C 6 min halten |
| | | 40°C/min | → | 205°C Messung/Beobachtung |

Unter identischen Abkühlbedingungen wurde nach bestimmten Kühlzeiten das Erscheinungsbild der Proben fotografisch dokumentiert (siehe Abbildungen). Die Talkum enthaltende Probe zeigt eindeutig von der Glasfaser ausgehende Transkristallisation, d.h. die Nukleierung ist an der Glasoberfläche deutlich stärker als in der Polymermatrix.

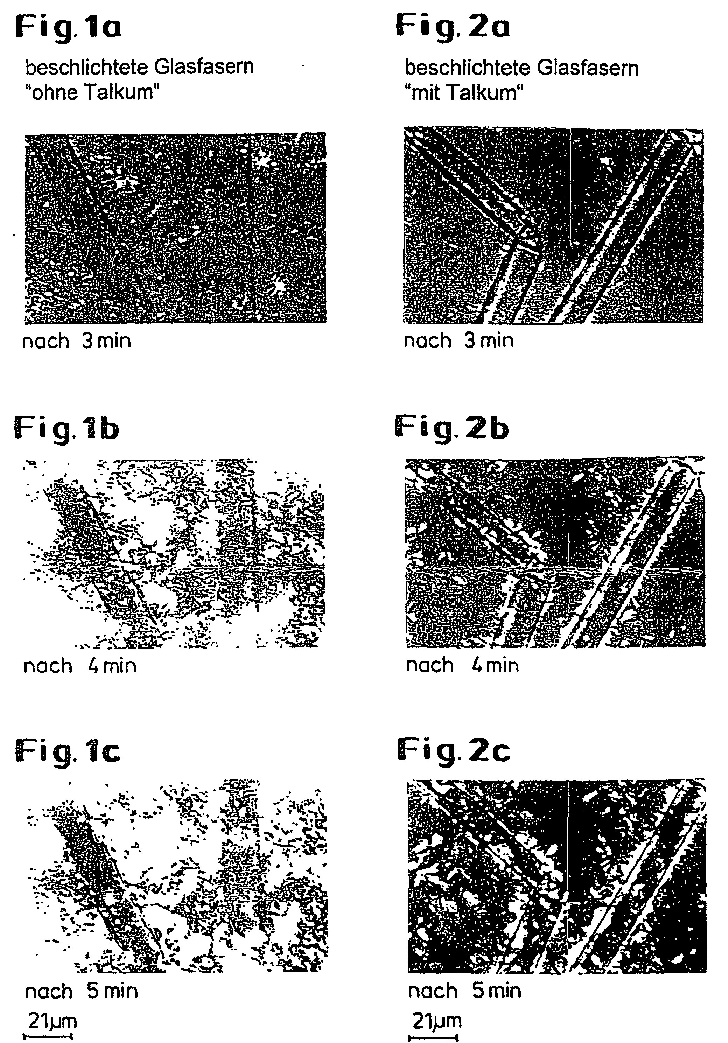

## Patentansprüche

1. Beschlichtete Glasfasern, **dadurch gekennzeichnet, dass** sie mit einer Schlichtezusammensetzung beschlichtet sind, die aus folgenden Komponenten besteht
a) 2 bis 20 Gew.-% wasserdispergierbaren, wasseremulgierbaren oder wasserlöslichen Polyepoxid-, Polyester-, Polyvinylacetat-, Polyacrylat- oder Polyurethanharzen als Filmbildner
b) 0,1 bis 10 Gew.-% organofunktionellen Alkoxysilanen als Haftvermittler,
c) 0,1 bis 20 Gew.-% anorganischen oder organischen, in Polymerschmelzen mit einem Prozent und weniger in Lösung gehenden Nukleierungsmitteln mit mittleren Teilchengrößen von <300 nm und >10 nm, wobei bei anisometrischen Nukleierungsmitteln (z.B. plättchen- oder nadelförmigen) unter der Teilchengröße die Dicke bzw. der Durchmesser zu verstehen ist, welche unter den Prozesstemperaturen bei der Einarbeitung der beschlichteten Glasfasern in die Polymerschmelze chemisch inert und thermisch stabil sind,
d) 0 bis 5 Gew.-% weiteren üblichen Hilfsmitteln,
e) 0 bis 5 Gew.-% Zusätzen zur Einstellung des pH-Wertes zwischen 4 und 10 und
f) Wasser als Rest auf 100 Gew.-%.

2. Verwendung der beschlichteten Glasfasern gemäß Anspruch 1 zur Verstärkung von thermoplastischen und duroplastischen Polymeren, bevorzugt von thermoplastischen Polyamiden, aromatischen Polyestern und Polypropylen.

## Claims

1. Sized glass fibres, **characterised in that** they are sized with a size composition which consists of the following components
a) 2 to 20 wt.% of water-dispersible, water-emulsifiable or water-soluble polyepoxide, polyester, polyvinyl acetate, polyacrylate or polyurethane resins as film-former,
b) 0.1 to 10 wt.% of organofunctional alkoxysilanes as bonding agents,
c) 0.1 to 20 wt.% of inorganic or organic nucleating agents, one percent or less of which go into solution in polymer melts, with average particle sizes < 300 nm and > 10 nm, wherein in the case of anisotropic nucleating agents (e.g. platelet or needle-shaped particles) the particle size is understood to be the thickness or the diameter, which are chemically inert and thermally stable at the process temperatures at which the coated glass fibres are incorporated into the polymer melts,
d) 0 to 5 wt.% of other conventional auxiliary substances,
e) 0 to 5 wt.% of additives for adjusting the pH to between 4 and 10, with
f) the remainder up to 100 wt.% being water.

2. Use of sized glass fibres according to Claim 1 for reinforcing thermoplastic and thermoset polymers, preferably thermoplastic polyamides, aromatic polyesters and polypropylene.

## Revendications

1. Fibres de verre ensimées, **caractérisées en ce qu'**elles sont ensimées par une composition d'ensimage, qui est constituée des composants suivants.
a) 2 à 20 % en poids de résines polyépoxydes, polyesters, polyvinylacétates, polyacrylates ou polyuréthanes, dispersables, émulsifiables ou solubles dans l'eau, comme agents filmogènes,
b) 0,1 à 10 % en poids d'alcoxysilanes organofonctionnels, comme promoteurs d'adhérence,
c) 0,1 à 20 % en poids d'agents de nucléation inorganiques ou organiques, entrant en solution dans les masses fondues de polymères à concurrence d'un pour cent et moins, avec des grosseurs de particules moyennes de < 300 nm et > 10 nm, auquel cas il faut entendre par grosseur de particule, l'épaisseur ou le diamètre pour des agents de nucléation anisométriques (par exemple lamellaires ou aciculaires), qui sont chimiquement inertes et thermostables aux températures de processus lors de l'incorporation des fibres de verre ensimées dans la masse fondue de polymères,
d) 0 à 5 % en poids d'autres adjuvants usuels,
d) 0 à 5 % en poids d'additifs pour ajuster le pH entre 4 et 10 et
f) de l'eau comme restant pour obtenir 100 % en poids.

2. Utilisation des fibres de verre ensimées selon la revendication 1 pour renforcer des polymères thermoplastiques et thermodurcissables, de préférence des polyamides thermoplastiques, des polyesters aromatiques et du polypropylène.
